# EUROPÄISCHE PATENTSCHRIFT

(11) **EP 1 265 022 B1**
(45) Veröffentlichungstag und Bekanntmachung des Hinweises auf die Patenterteilung: **11.01.2006**
(21) Anmeldenummer: 02012564.7
(22) Anmeldetag: 05.06.2002
(51) Int. Cl.: F16M 7/00

(54) **Aufhängung zur Lagerung einer Maschine auf einem Untergrund**
Suspension for mounting a machine on a base
Suspension pour le montage d'une machine sur une base

(30) Priorität: 05.06.2001 DE 20109332 U
(43) Veröffentlichungstag der Anmeldung: 11.12.2002
(73) Patentinhaber: ebm-papst Landshut GmbH, 84030 Landshut (DE)
(72) Erfinder: Enders, Wilhelm, 84109 Wörth / Isar (DE); Bayersdorfer, Gerhard, 84030 Ergolding (DE)
(74) Vertreter: Sperling, Rüdiger

(56) Entgegenhaltungen:
- DE-U- 1 973 723
- DE-U- 20 109 332
- FR-A- 2 643 446
- US-A- 2 642 253
- PATENT ABSTRACTS OF JAPAN Bd. 0110, Nr. 54 (M-563), 19. Februar 1987 (1987-02-19) -& JP 61 215827 A (HITACHI LTD), 25. September 1986 (1986-09-25)

## Beschreibung

Die Erfindung betrifft eine Aufhängung zur Lagerung einer Maschine auf einem Untergrund, insbesondere zur Montage eines Elektromotors auf einer Gehäusewand, gemäß dem Oberbegriff des Anspruchs 1. Eine solche Aufhängung ist z.B aus dem Dokument FR 2 643 446 A schon bekannt. Es ist bekannt, Elektromotoren in Elektro-Haushaltsgeräten schwingungsgedämpft an dem Gehäuse des Elektro-Haushaltsgerätes zu befestigen, um eine Übertragung mechanischer Schwingungen von dem Elektromotor auf das Gehäuse des Elektro-Haushaltsgerätes zu vermeiden. Derartige bekannte schwingungsgedämpfte Aufhängungen weisen einen an dem Gehäuse befestigten Metallbolzen sowie eine an dem Elektromotor befestigte Gummitülle auf, wobei der Elektromotor mit der Gummitülle bei der Montage auf den Metallbolzen aufgesetzt wird, so dass die Gummitülle und der Metallbolzen eine Nut-Feder-Verbindung bilden. Hierzu ist in der Mantelfläche des Metallbolzens eine Nut angeformt, in die eine an der Montageöffnung der Tülle angeformte Feder eingreift. Darüber hinaus weisen die bekannten Aufhängungen der vorstehend beschriebenen Art ein zusätzliches Sicherungselement in Form eines Sicherungsringes, einer Sperrscheibe, einer Schraube oder dergleichen auf, um zu verhindern, dass sich der Elektromotor durch Stöße im Betrieb oder während des Transportes aus der Aufhängung lösen kann.

Nachteilig an der vorstehend beschriebenen bekannten Aufhängung für einen Elektromotor ist also die Tatsache, dass ein zusätzliches Sicherungselement erforderlich ist. Dies ist insbesondere bei der Montage aufwendig, da der Befestigungsbolzen einerseits und das zusätzliche Sicherungselement andererseits aus unterschiedlichen Richtungen zugeführt werden müssen, was die automatisierte Montage erschwert.

Der Erfindung liegt somit die Aufgabe zugrunde, die vorstehend beschriebene bekannte Aufhängung dahingehend zu verbessern, dass auf eine zusätzliches separates Sicherungselement verzichtet werden kann.

Diese Aufgabe wird, ausgehend von der eingangs beschriebenen bekannten Aufhängung gemäß dem Oberbegriff des Anspruchs 1, durch die kennzeichnenden Merkmale des Anspruchs 1 gelöst.

Die Erfindung umfaßt die allgemeine technische Lehre, das Sicherungselement einstückig an ein bolzenartiges Befestigungselement anzuformen, so dass auf ein separates Sicherungselement wie einen Sicherungsring, eine Sperrscheibe, eine Schraube oder dergleichen verzichtet werden kann.

Vorteilhaft an der erfindungsgemäßen Aufhängung ist insbesondere, dass bei der Montage nur eine einzige Fügerichtung vorkommt, was die automatisierte Montage wesentlich vereinfacht.

Bei der erfindungsgemäßen Anordnung ist deshalb ein bolzenartiges Befestigungselement vorgesehen, das im montierten Zustand an dem Untergrund, wie beispielsweise einer Gehäusewand, befestigt ist. Der Begriff Untergrund ist im Rahmen der Erfindung allgemein zu verstehen und umfaßt beispielsweise die vorstehend erwähnte Gehäusewand, ein Maschinenfundament oder den Boden einer Montagehalle, auf dem eine Maschine befestigt wird.

Weiterhin umfaßt die erfindungsgemäße Aufhängung ein Entkopplungselement, das die Maschine im montierten Zustand mit dem bolzenartigen Befestigungselement verbindet, wobei das Entkopplungselement im montierten Zustand formschlüssig mit dem bolzenartigen Befestigungselement verbunden ist. Das Entkopplungselement besteht hierbei aus einem nachgiebigen Material, um bei der Montage die Herstellung der formschlüssigen Verbindung zwischen dem bolzenartigen Befestigungselement und dem Entkopplungselement zu ermöglichen und die Maschine mechanisch von dem Untergrund zu entkoppeln.

In der bevorzugten Ausführungsform der Erfindung besteht das Entkopplungselement im wesentlichen aus einer mit der zu lagernden Maschine verbundenen Tülle mit zwei einander in Montagerichtung gegenüber liegenden Montageöffnungen, in die das bolzenartige Befestigungelement bei der Montage eingeführt wird, wobei das bolzenartige Befestigungselement an seinem dem Untergrund abgewandten Ende als zusätzliches Sicherungselement eine Erweiterung aufweist, die im montiertem Zustand auf der dem Untergrund abgewandten Montageöffnung der Tülle aufliegt. Das bolzenartige Befestigungselement bildet hierbei mit seiner Erweiterung also eine Art Widerhaken, der eine Lösung der Verbindung zwischen dem bolzenartigen Befestigungselement bzw. dem Untergrund einerseits und der Tülle bzw. der Maschine andererseits verhindert.

Vorzugsweise verjüngt sich die Erweiterung des bolzenartigen Befestigungselementes zu dessen freien Ende hin, um das Einführen des bolzenartiges Befestigungselements in die Tülle zu erleichtern. In der bevorzugten Ausführungsform ist die das zusätzliche Sicherungselement bildende Erweiterung des bolzenartigen Befestigungselementes deshalb als Kegelstumpf ausgebildet, der im montierten Zustand auf der dem Untergrund abgewandten Montageöffnung der Tülle aufliegt. Der Öffnungswinkel des Kegelstumpfs liegt hierbei vorzugsweise zwischen 20° und 90°, wobei alle Werte innerhalb dieses Winkelbereichs möglich sind.

Die Tülle ist ihrerseits durch eine Nut-Feder-Verbindung mit der Maschine bzw. dem Gehäuse oder der Motorbaugruppe verbunden. In einer Variante der Erfindung ist hierbei in der Tülle eine Nut und in der Maschine bzw. dem Maschinengehäuse oder der Motorbaugruppe eine entsprechend formangepaßte Feder angeformt. In einer anderen Variante der Erfindung ist dagegen in der Tülle eine Feder und in der Maschine bzw. dem Maschinengehäuse oder der Motorbaugruppe eine entsprechend formangepaßte Nut angeformt. Die von der Tülle gebildete Feder wird hierbei vorzugsweise von der Wandung der Tülle im Bereich der Montageöffnung gebildet, wobei diese Feder im montierten Zustand in eine entsprechend formangepaßte Nut in dem bolzenartigen Befestigungselement eingreift.

In einer vorteilhaften Weiterbildung der Erfindung ist weiterhin ein Lagerschild vorgesehen, das an der Maschine, dem Maschinengehäuse bzw. der Motorbaugruppe angebracht ist, und die Tülle im montierten Zustand seitlich teilweise oder ganz umgibt, wodurch eine Beschädigung der Tülle weitgehend verhindert wird. Insbesondere wirkt das Lagerschild als Transportsicherung gegen Stöße in axialer und radialer Richtung. Vorzugsweise ist ein derartiges Lagerschild topfförmig ausgebildet, jedoch sind auch andere Ausgestaltungen des Lagerschildes möglich.

In der bevorzugten Ausführungsform der Erfindung bewirkt das Entkopplungselement bzw. die Tülle nicht nur eine mechanische Entkopplung der Maschine von dem Untergrund, sondern auch eine thermische Isolation. Es ist deshalb vorzugsweise vorgesehen, dass das Entkopplungselement aus einem Material besteht, dessen thermische Leitfähigkeit wesentlich geringer ist als die thermische Leitfähigkeit des Materials des bolzenartigen Befestigungselements, um die Maschine thermisch von dem Untergrund zu entkoppeln.

Bevorzugte Materialien für das Entkopplungselement bzw. die Tülle sind Elastomere wie Gummi oder Silikonkautschuk oder herkömmliche Kunststoffe. Vorzugsweise ist das Material des Entkopplungselementes nicht nur elastisch, sondern auch schwingungsdämpfend, um eine Schwingungsanregung durch die Anregungsfrequenzen der gelagerten Maschine abzuschwächen.

Darüber hinaus ist die Elastizität des Entkopplungselementes vorzugsweise so bemessen, dass die mechanische Eigenfrequenz der Aufhängung ungleich den Anregungsfrequenzen der Maschine ist, um eine Schwingungsresonanz zu vermeiden. Die Elastizität des Entkopplungselementes kann hierbei im wesentlichen auf zwei Arten variiert werden. Eine Möglichkeit hierzu besteht darin, ein entsprechend hartes oder weiches Material für das Entkopplungselement auszuwählen. Eine andere Möglichkeit zur Beeinflussung der Elastizität des Entkopplungselements besteht dagegen darin, dem Entkopplungselement eine entsprechende Geometrie zu geben, die mehr oder weniger steif ist. Unter Ausnutzung der beiden vorstehend erwähnten konstruktiven Gestaltungsmöglichkeiten kann das Entkopplungselement beispielsweise so starr ausgebildet sein, dass die mechanische Eigenfrequenz der Aufhängung wesentlich größer ist als die Anregungsfrequenzen der Maschine. Das Entkopplungselement kann dagegen auch so nachgiebig ausgebildet sein, dass die mechanische Eigenfrequenz der Aufhängung wesentlich kleiner ist als die Eigenfrequenzen der Maschine.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert.

Es zeigen:
- Fig.1: die erfindungsgemäße Aufhängung vor der Montage,
- Fig.2: die in Fig. 1 dargestellte Aufhängung im montierten Zustand,
- Fig.3: die Gummitülle der in Figuren 1 und 2 dargestellten Aufhängung sowie
- Fig.4: den Befestigungsbolzen der in den Figuren 1 und 2 dargestellten Aufhängung.

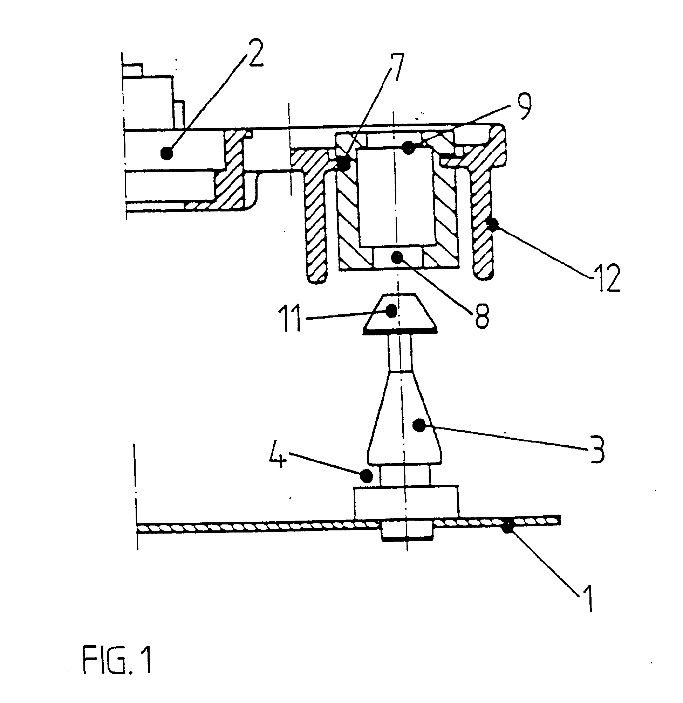

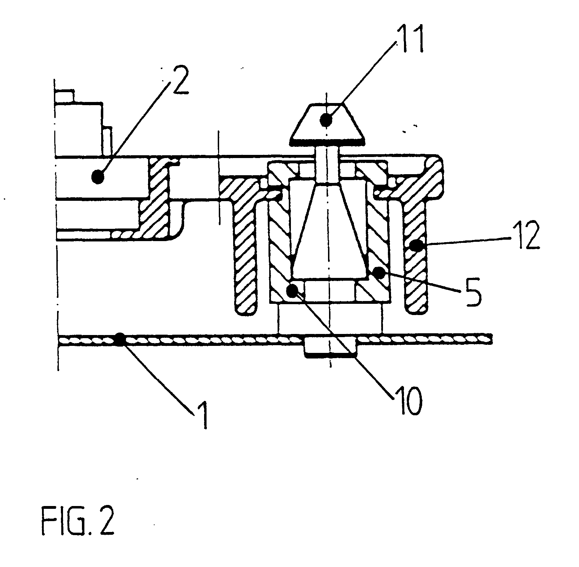

Die in den Figuren 1 und 2 als bevorzugtes Ausführungsbeispiel der Erfindung dargestellte Aufhängung ermöglicht die schwingungsgedämpfte Befestigung eines Elektromotors an einer Gehäusewand 1. Zur Vereinfachung ist hierbei lediglich ein Teil eines Lagerschilds oder eines Befestigungsblechs 2 des Elektromotors dargestellt, wohingegen der Elektromotor selbst weggelassen wurde.

Zur Verbindung des Elektromotors mit der Gehäusewand 1 weist die erfindungsgemäße Aufhängung einen aus Stahl bestehenden Befestigungsbolzen 3 auf, der in einer Bohrung in der Gehäusewand 1 verankert wird. Hierzu kann der Befestigungsbolzen 3 beispielsweise in der Bohrung der Gehäusewand 1 festgeschweißt werden. Es besteht jedoch auch die Möglichkeit, dass der Befestigungsbolzen 3 an seinem der Gehäusewand 1 zugewandten Ende eine Außengewinde trägt und in die Bohrung in der Gehäusewand 1 eingeschraubt wird. Darüber hinaus kann der Befestigungsbolzen 3 auch in die Bohrung in der Gehäusewand 1 eingepreßt oder mit der Gehäusewand 1 verklebt werden. Ferner besteht auch die Möglichkeit, das der Gehäusewand 1 zugewandte Ende des Befestigungsbolzens 3 als Niet auszubilden, so dass der Befestgungsbolzen 3 mit der Gehäusewand 1 eine Nietverbindung bildet. Die erfindungsgemäße Aufhängung ist jedoch hinsichtlich der Verbindung des Befestigungsbolzens 3 mit der Gehäusewand 1 nicht auf die vorstehend beschriebenen Fügeverfahren beschränkt.

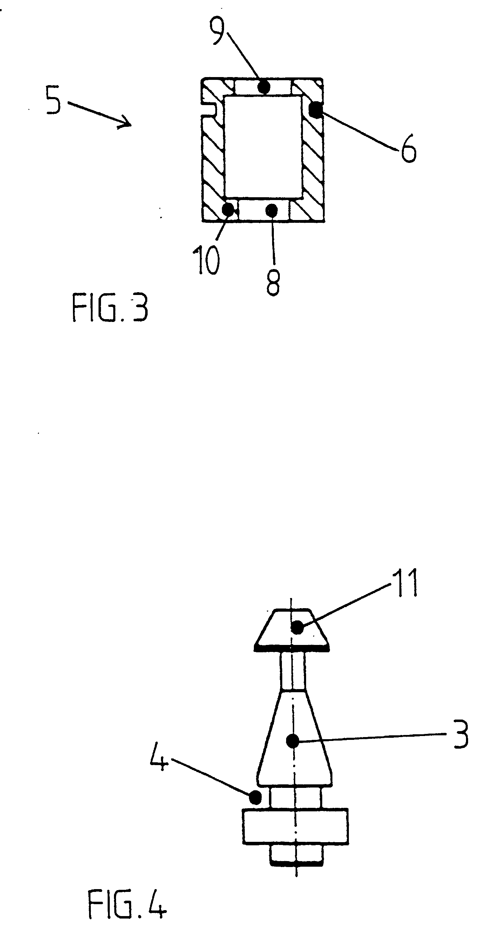

Weiterhin umfaßt die erfindungsgemäße Aufhängung eine rotationssymmetrisch ausgebildete Gummitülle 5 auf, die mit dem Befestigungsblech 2 des Elektromotors durch eine Nut-Feder-Verbindung verbunden ist. Hierzu ist an der Außenseite der Gummitülle 5 eine ringförmig umlaufende Nut 6 angeformt, die insbesondere aus der Detaildarstellung der Gummitülle in Figur 3 ersichtlich ist. Das Befestigungsblech 2 des Elektromotors weist entsprechend eine Bohrung zur Aufnahme der Gummitülle 5 auf, wobei an den Umfangsrändern dieser Bohrung eine ringförmig umlaufende Feder 7 angeformt ist, die im montierten Zustand der erfindungsgemäßen Aufhängung in die Nut 6 der Gummitülle 5 eingreift und die Gummitülle 5 dadurch formschlüssig mit dem Befestigungsblech 2 des Elektromotors verbindet. Das Befestigungsblech 2 kann jedoch auch als gegossener Lagerschild ausgeführt sein.

Darüber hinaus weist die Gummitülle 5 zwei Montageöffnungen 8, 9 auf, die einander bezüglich der Ebene der ringförmig umlaufenden Nut 6 gegenüber liegen. Die Umfangsränder der Montageöffnung 8 bilden hierbei eine Feder 10, die in montiertem Zustand in die ringförmig umlaufende Nut 4 in der Mantelfläche des Befestungsbolzens 3 eingreift und die Gummitülle 5 dadurch formschlüssig mit dem Befestigungsbolzen 3 verbindet. Der Innendurchmesser der Montageöffnung 8 ist deshalb im wesentlichen gleich dem Außendurchmesser des Befestigungsbolzens 3 im Bereich der ringförmig umlaufenden Nut 4.

Oberhalb der Nut 4 verjüngt sich der Befestigungsbolzen 3 zu seinem freien Ende hin, so dass die Mantelfläche des Befestigungsbolzens 3 in diesem Bereich eine Einführschräge bildet, die das Einführen der Feder 10 der Gummitülle 5 in die Nut 4 des Befestigungsbolzens 3 erleichtert.

An seinem freien Ende weist der Befestigungsbolzen 3 darüber hinaus eine kegelstumpfförmige Erweiterung 11 auf, die als zusätzliches Sicherungselement dient und im montierten Zustand verhindert, dass sich der Elektromotor mit dem Befestigungsblech 2 und der Gummitülle 5 aufgrund von Stößen im Betrieb oder während des Transportes von dem Befestigungsbolzen 3 löst. Die Erweiterung 11 befindet sich also im montierten Zustand der Aufhängung oberhalb der Montageöffnung 9 der Gummitülle 5, wobei der Außendurchmesser der Erweiterung 11 an deren unterem Ende größer ist als der Innendurchmesser der Montagebohrung 9, so dass ein Herausziehen des Befestigungsbolzens 3 aus der Gummitülle 5 nur mit einer Lösekraft möglich ist, die einem Mehrfachen des Motorgewichts entspricht.

Zur Montage der erfindungsgemäßen Aufhängung wird also zunächst der Befestigungsbolzen 3 in der vorstehend beschriebenen Weise an der Gehäusewand 1 befestigt.

Anschließend wird dann der Elektromotor mit dem Befestigungsblech 2 bzw. einem angegossenen Lagerschild und der vormontierten Gummitülle 5 so auf den Befestigungsbolzen 3 aufgesteckt, dass die Erweiterung 11 durch die Montageöffnungen 8 und 9 hindurchtritt, bis die durch den Umfangsrand der Montageöffnung 8 gebildete Feder 10 in die Nut 4 des Befestigungsbolzens 3 eingreift.

Weiterhin ist an dem Befestigungsblech 2 ein Lagerschild 12 angeformt, dass die Gummitülle 5 im montierten Zustand topfförmig umgibt und dadurch eine Beschädigung der Gummitülle 5 verhindert. Darüber hinaus wirkt das Lagerschild 12 als Transportsicherung bei Stößen in axialer und radialer Richtung.

Die Elastizität der Verbindung zwischen dem Elektromotor bzw. dem Befestigungsblech 2 einerseits und der Gehäusewand 1 andererseits wird hierbei zum einen durch die Elastizität des Materials der Gummitülle 5 und zum anderen durch die Geometrie der Gummitülle 5 bestimmt. So nimmt die Nachgiebigkeit der Verbindung mit der axialen Länge der Gummitülle 5 zu, wohingegen die Nachgiebigkeit der Verbindung mit der Dicke der Seitenwände der Gummitülle 5 abnimmt.

Die axiale Länge der Gummitülle 5, die Dicke der Seitenwände der Gummitülle 5 und die Elastizität des Materials der Gummitülle werden deshalb so ausgewählt, dass die mechanische Eigenfrequenz der Aufhängung ungleich den Anregungsfrequenzen des Elektromotors ist, um eine Schwingungsresonanz zu vermeiden. Bei dem hier dargestellten Ausführungsbeispiel der Erfindung ist die Eigenfrequenz der Aufhängung wesentlich größer als die im Betrieb auftretenden Anregungsfrequenzen des Elektromotors. Es ist jedoch alternativ auch möglich, dass die Aufhängung so weich ist, dass die Eigenfrequenz der Aufhängung wesentlich kleiner ist als die Eigenfrequenzen des Elektromotors.

Die Erfindung ist nicht auf das vorstehend beschriebene Ausführungsbeispiel beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste:

- 1: Gehäusewand
- 2: Befestigungsblech des Elektromotors
- 3: Befestigungsbolzen
- 4: Nut in dem Befestigungsbolzen
- 5: Gummitülle
- 6: Nut in der Gummitülle
- 7: Feder in dem Befestigungsblech
- 8,9: Montageöffnungen in der Gummitülle
- 10: Feder in der Gummitülle
- 11: Erweiterung als zusätzliches Sicherungselement
- 12: Lagerschild

## Patentansprüche

1. Aufhängung zur Lagerung einer Maschine (2) auf einem Untergrund (1),
insbesondere zur Montage eines Elektromotors auf einer Gehäusewand, mit
mindestens einem im montierten Zustand an dem Untergrund (1) befestigten bolzenartigen Befestigungselement (3),
mindestens einem Entkopplungselement (5), das die Maschine (2) im montierten Zustand mit dem bolzenartigen Befestigungselement (3) verbindet,
wobei das Entkopplungselement (5) im montierten Zustand formschlüssig mit dem bolzenartigen Befestigungselement (3) verbunden ist,
während das Entkopplungselement (5) aus einem nachgiebigen Material besteht, um bei der Montage die Herstellung der formschlüssigen Verbindung zwischen dem bolzenartigen Befestigungselement (3) und dem Entkopplungselement (5) zu ermöglichen und die Maschine (2) mechanisch von dem Untergrund (1) zu entkoppeln,
**dadurch gekennzeichnet,**
**daß** an das bolzenartige Befestigungselement (3) zusätzlich zu der formschlüssigen Verbindung ein Sicherungselement (11) einstückig angeformt ist, um eine Lösung der Verbindung zwischen dem Entkopplungselement (5) und dem bolzenartigen Befestigungselement (3) im Betrieb und beim Transport der Maschine (2) zu verhindern.

2. Aufhängung nach Anspruch 1, **dadurch gekennzeichnet,**
**daß** das Entkopplungselement (5) im wesentlichen aus einer mit der Maschine (2) verbundenen Tülle (5) mit zwei einander in Montagerichtung gegenüberliegenden Montageöffnungen (8, 9) besteht, in die das bolzenartige Befestigungselement (3) bei der Montage eingeführt wird,
wobei das bolzenartige Befestigungselement (3) an seinem dem Untergrund (1) abgewandten Ende als zusätzliches Sicherungselement eine Erweiterung (11) aufweist, die im montierten Zustand über der dem Untergrund (1) abgewandten Montageöffnung (9) der Tülle (5) liegt.

3. Aufhängung nach Anspruch 2, **dadurch gekennzeichnet, daß** sich die Erweiterung (11) des bolzenartigen Befestigungselements (3) zu dessen freien Ende hin verjüngt, um das Einführen des bolzenartigen Befestigungselements (3) in die Tülle (5) zu erleichtern.

4. Aufhängung nach Anspruch 2 oder 3, **dadurch gekennzeichnet, daß** die Tülle (5) durch eine Nut-Feder-Verbindung mit der Maschine (2), einem Lagerschild oder einem Befestigungsblech verbunden ist.

5. Aufhängung nach Anspruch 4, **dadurch gekennzeichnet, daß** in der Tülle (5) eine Nut (6) und in der Maschine (2), einem Lagerschild oder einem Befestigungsblech eine entsprechend formangepaßte Feder (7) angeformt ist.

6. Aufhängung nach Anspruch 4, **dadurch gekennzeichnet, daß** in der Tülle (5) eine Feder und in der Maschine (2), einem Lagerschild oder einem Befestigungsblech eine entsprechend formangepaßte Nut angeformt ist.

7. Aufhängung nach Anspruch 6, **dadurch gekennzeichnet, daß** die Wandung der Tülle (5) an der dem Untergrund (1) zugewandten Montageöffnung (8) eine Feder (10) bildet, die im montierten Zustand in eine Nut (4) in dem bolzenartigen Befestigungselement (3) eingreift.

8. Aufhängung nach mindestens einem der Ansprüche 2 bis 7, **dadurch gekennzeichnet, daß** an der Maschine (2) ein Lagerschild (12) angebracht ist, das die Tülle (5) im montierten Zustand ganz oder teilweise umgibt.

9. Aufhängung nach mindestens einem der vorangehenden Ansprüche, **dadurch gekennzeichnet, daß** das bolzenartige Befestigungselement (3) und das Entkopplungselement (5) zur formschlüssigen Verbindung eine Nut-Feder-Verbindung bilden.

10. Aufhängung nach Anspruch 9, **dadurch gekennzeichnet, daß** in dem bolzenartigen Befestigungselement (3) eine Nut (4) und in dem Entkopplungselement (5) eine entsprechend formangepaßte Feder (10) angeformt ist.

11. Aufhängung nach Anspruch 10, **dadurch gekennzeichnet, daß** sich das bolzenartige Befestigungselement (3) von der dem Untergrund (1) abgewandten Flanke der Nut zu dem freien Ende des bolzenartigen Befestigungselements (3) hin verjüngt, wobei die sich verjüngende Mantelfläche des bolzenartigen Befestigungselements (3) eine Einführschräge bildet.

12. Aufhängung nach Anspruch 9, **dadurch gekennzeichnet, daß** in dem bolzenartigen Befestigungselement (3) eine Feder und in dem Entkopplungselement (5) eine entsprechend formangepaßte Nut angeformt ist.

13. Aufhängung nach mindestens einem der vorhergehenden Ansprüche, **dadurch gekennzeichnet, daß** das Entkopplungselement (5) aus einem Material besteht, dessen thermische Leitfähigkeit wesentlich geringer ist als die thermische Leitfähigkeit des Materials des bolzenartigen Befestigungselements (3), um die Maschine (2) thermisch von dem Untergrund (1) zu entkoppeln.

14. Aufhängung nach mindestens einem der vorhergehenden Ansprüche, **dadurch gekennzeichnet, daß** das Entkopplungselement (5) aus einem Material besteht, das elastisch und schwingungsdämpfend ist.

15. Aufhängung nach Anspruch 14, **dadurch gekennzeichnet, daß** die Elastizität des Entkopplungselements (5) so bemessen ist, daß die mechanische Eigenfrequenz der Aufhängung ungleich den Anregungsfrequenzen der Maschine (2) ist, um eine Schwingungsresonanz zu vermeiden.

16. Aufhängung nach Anspruch 15, **dadurch gekennzeichnet, daß** das Entkopplungselement (5) so starr ist, daß die mechanische Eigenfrequenz der Aufhängung wesentlich größer ist als die Anregungsfrequenzen der Maschine (2).

17. Aufhängung nach Anspruch 15, **dadurch gekennzeichnet, daß** das Entkopplungselement (5) so nachgiebig ist, daß die mechanische Eigenfrequenz der Aufhängung wesentlich kleiner ist als die Anregungsfrequenz der Maschine (2).

18. Aufhängung nach mindestens einem der vorhergehenden Ansprüche, **dadurch gekennzeichnet, daß** die Lösekraft des zusätzlichen Sicherungselements (11) wesentlich größer als die Gewichtskraft der Maschine (2) ist.

19. Aufhängung nach Anspruch 18, **dadurch gekennzeichnet, daß** die Lösekraft des zusätzlichen Sicherungselements (11) größer als 30 N ist.

## Claims

1. Suspension for supporting a machine (2) on a base (1),
particularly for mounting an electric motor on a casing wall, comprising
at least one stud-like mounting element (3) attached on the base (1) in its mounted state,
at least one decoupling element (5) connecting the machine with the stud-like mounting element (3) in its mounted state,
the decoupling element (5) being in interlocking fit with the stud-like mounting element (3) in its mounted state,
while the decoupling element (5) consists of a resilient material to permit the forming of an interlocking connection between the stud-like mounting element (3) and the decoupling element (5) and to mechanically decouple the machine (2) from the base (1),
**characterized in that**
in addition to the interlocking connection a securing element (11) is formed integrally with the stud-like mounting element (3) to avoid detachment of the connection between the decoupling element (5) and the stud-like mounting element (3) during operation and transport of the machine (2).

2. Suspension as claimed in claim 1, **characterized in that** the decoupling element (5) essentially consists of a socket (5) having two mounting holes (8, 9) which are opposed in the mounting direction, into which the stud-like mounting element (3) is inserted during mounting,
the stud-like mounting element (3) having, as an additional securing element at its end facing away from the base (1), an expansion (11) which in the mounted state lies over said mounting hole (9) of the socket (5) that faces away from said base (1).

3. Suspension as claimed in claim 2, **characterized in that** the expansion (11) of the stud-like mounting element (3) tapers towards its free end to facilitate the insertion of the stud-like mounting element (3) into said socket (5).

4. Suspension as claimed in claim 2 or 3, **characterized in that** said socket (5) is connected to the machine (2), a support shield or a mounting plate by means of a groove-and-tongue-connection.

5. Suspension as claimed in claim 4, **characterized in that** in said socket (5) a groove (6) is formed and in the machine (2), a support shield or a mounting plate a correspondingly matching tongue (7) is formed.

6. Suspension as claimed in claim 4, **characterized in that** in said socket (5) a tongue is formed and in the machine (2), a support shield or a mounting plate a correspondingly matching groove (7) is formed.

7. Suspension as claimed in claim 6, **characterized in that** the wall of said socket (5) forms a tongue (10) at the mounting hole (8) facing towards the base (1) which engages a groove (4) in the stud-like mounting element (3) in its mounted state.

8. Suspension as claimed in at least one of the claims 2 to 7, **characterized in that** a support shield (12) is attached to the machine (2) which completely or partially surrounds said socket (5) in its mounted state.

9. Suspension as claimed in at least one of the preceding claims, **characterized in that** the stud-like mounting element (3) and the decoupling element (5) form a groove-tongue-engagement for interference connection.

10. Suspension as claimed in claim 9, **characterized in that** a groove is formed in the stud-like mounting element (3) and a correspondingly matching tongue (10) is formed in the decoupling element (5).

11. Suspension as claimed in claim 10, **characterized in that** the stud-like mounting element (3) converges from the flank of the groove facing away from the base (1) towards the free end of the stud-like mounting element (3), the converging surface of the stud-like mounting element (3) forming an insertion taper.

12. Suspension as claimed in claim 9, **characterized in that** a tongue is formed in the stud-like mounting element (3) and a correspondingly matching groove is formed in the decoupling element (5).

13. Suspension as claimed in at least one of the preceding claims, **characterized in that** the decoupling element (5) consists of a material with a thermal conductibility substantially lower than the thermal conductibility of the material of the stud-like mounting element (3) to provide a thermal decoupling of the machine (2) from the base (1).

14. Suspension as claimed in at least one of the preceding claims, **characterized in that** the decoupling element (5) consists of a resilient, vibration damping material.

15. Suspension as claimed in claim 14, **characterized in that** the resilience of the decoupling element (5) is dimensioned in such a way that the mechanical natural frequency of the suspension is different from the excitation frequencies of the machine (2) to avoid oscillation resonance.

16. Suspension as claimed in claim 15, **characterized in that** the decoupling element (5) is rigid to an extent that the mechanical natural frequency of the suspension is substantially greater than the excitation frequencies of the machine (2).

17. Suspension as claimed in claim 15, **characterized in that** the decoupling element (5) is flexible to an extent that the mechanical natural frequency of the suspension is substantially smaller than the excitation frequency of the machine (2).

18. Suspension as claimed in at least one of the preceding claims, **characterized in that** the detachment force of the additional securing element (11) is substantially higher than the weight of the machine (2).

19. Suspension as claimed in claim 18, **characterized in that** the detachment force of the additional securing element (11) is higher than 30 N.

## Revendications

1. Une suspension pour l'appui d'une machine (2) sur un socle (1), en particulier pour le montage d'un moteur électrique sur la paroi d'un boîtier-carter,
avec au moins un élément de fixation par tourillon (3), dans l'état monté fixé au socle (1),
au moins un élément de découplage (5) qui relie dans l'état monté la machine (2) avec l'élément de fixation par tourillon (3),
l'élément de découplage (5) étant relié dans l'état monté par accouplement à crabot,
l'élément de découplage (5) étant réalisé dans un matériau déformable pour permettre lors du montage d'établir la liaison par crabotage entre l'élément de fixation par tourillon (3) et l'élément de découplage (5), en vue de découpler la machine (2) du socle,
**caractérisé en ce que**
l'élément de fixation par tourillon (3) est équipé, en plus de la liaison par crabot, d'un élément intégré de sécurité (11) d'un seul tenant, destiné à empêcher la séparation de la liaison entre l'élément de découplage (5) et l'élément de fixation par tourillon (3) pendant le service et pendant le transport de la machine.

2. Une suspension selon la revendication 1, **caractérisé en ce que** l'élément de découplage (5) est composé pour l'essentiel d'une douille reliée avec la machine (2), présentant deux trous de montage (8, 9) mutuellement opposés dans le sens du montage, dans lesquels est introduit l'élément de fixation par tourillon (3) lors du montage,
lequel élément de fixation par tourillon (3) présentant à son extrémité du côté opposé au socle (1), en guise d'élément de sécurité supplémentaire, une extension (11) qui dans l'état monté se trouve au-dessus de l'ouverture de la douille (5) regardant du côté opposé au socle (1)

3. Une suspension selon la revendication 2, **caractérisé en ce que** l'extension (11) de l'élément de fixation par tourillon (3) se rétrécit en forme de cône à son extrémité libre pour faciliter l'insertion de l'élément de fixation par tourillon (3) dans la douille (5).

4. Une suspension selon la revendication 2 ou 3, **caractérisé en ce que** la douille (5) est reliée par liaison gorge-goupille avec la machine, avec une flasque, ou avec une tôle de fixation.

5. Une suspension selon la revendication 4, **caractérisé en ce que** dans la douille (5) est formée une gorge (6) et dans la machine (2), ou bien dans la flasque, ou dans la tôle de fixation est intégrée une goupille de forme adaptée en conséquence.

6. Une suspension selon la revendication 4, **caractérisé en ce que** dans la douille (5) est intégrée une goupille et dans la machine (2), dans la flasque, ou dans la tôle de fixation est intégrée une gorge de forme adaptée en conséquence.

7. Une suspension selon la revendication 6, **caractérisé en ce que** la paroi de la douille (5), du côté trou de montage (8) regardant vers le socle (1), présente la forme d'une goupille (10) qui s'insère à l'état monté dans une gorge (4) dans l'élément de fixation par tourillon (3) .

8. Une suspension selon au moins l'une des revendications 2 à 7, **caractérisé en ce que** la machine (2) est équipée d'une flasque (12) qui dans l'état monté entoure la douille (5), soit complètement soit partiellement.

9. Une suspension selon au moins l'une des revendications précédentes, **caractérisé en ce que** l'élément de fixation par tourillon (3) et l'élément de découplage (5) forment une liaison à crabotage par gorge-goupille.

10. Une suspension selon la revendication 9, **caractérisé en ce que** dans l'élément de fixation par tourillon (3) est formée une gorge et dans l'élément de découplage (5) est formée une goupille de forme correspondante.

11. Une suspension selon la revendication 10, **caractérisé en ce que** l'élément de fixation par tourillon (3) se rétrécit en forme de cône du côté libre opposé au socle (1), la surface allant en s'effilant de l'élément de fixation par tourillon (3) formant un biseau d'insertion.

12. Une suspension selon la revendication 9, **caractérisé en ce que** dans l'élément de fixation par tourillon (3) est formée une goupille et dans l'élément de découplage (5) est formée une gorge de forme correspondante.

13. Une suspension selon au moins l'une des revendications précédentes, **caractérisé en ce que** l'élément de découplage (5) est réalisé dans un matériau dont la conductibilité thermique est significativement moindre que la conductibilité thermique du matériau dans lequel est fabriqué l'élément de fixation par tourillon (3), de manière à assurer le découplage thermique entre la machine (2) et le socle (1) .

14. Une suspension selon au moins l'une des revendications précédentes, **caractérisé en ce que** l'élément de découplage (5) est réalisé dans un matériau élastique et amortisseur de vibrations.

15. Une suspension selon la revendication 14, **caractérisé en ce que** l'élasticité de l'élément de découplage (5) est calculée de telle manière que la fréquence de résonance mécanique de la suspension est différente des fréquences d'excitation de la machine (2), de manière à éviter une résonance des vibrations.

16. Une suspension selon la revendication 15, **caractérisé en ce que** la rigidité de l'élément de découplage (5) est telle que la fréquence de résonance mécanique de la suspension est nettement plus élevée que les fréquences d'excitation de la machine (2) .

17. Une suspension selon la revendication 15, **caractérisé en ce que** la déformabilité de l'élément de découplage (5) est telle que la fréquence de résonance mécanique de la suspension est nettement plus basse que la fréquence d'excitation de la machine (2).

18. Une suspension selon au moins l'une des revendications précédentes, **caractérisé en ce que** la force de retenue de l'élément supplémentaire de sécurité (11) est nettement plus élevée que la force exercée par le poids de la machine (2) .

19. Une suspension selon au moins l'une des revendications précédentes, **caractérisé en ce que** la force de retenue de l'élément supplémentaire de sécurité (11) dépasse 30 N.
